# FASCICULE DE BREVET EUROPEEN

(11) **EP 3 053 772 B1**
(45) Date de publication et mention de la délivrance du brevet: **19.09.2018**
(21) Numéro de dépôt: 16154481.2
(22) Date de dépôt: 05.02.2016
(51) Int. Cl.: B60L 3/00, F16D 9/02, F16D 9/00, B61C 15/14, B61C 3/00, B61L 3/14

(54) **SYSTÈME DE PROTECTION DE LA CHAÎNE DE TRACTION D'UN VÉHICULE FERROVIAIRE, LIGNE DE TRANSMISSION ET VÉHICULE FERROVIAIRE ASSOCIÉS**
SCHUTZSYSTEM DES ANTRIEBSSTRANGS EINES SCHIENENFAHRZEUGS UND ENTSPRECHENDER ANTRIEBSSTRANG UND SCHIENENFAHRZEUG
PROTECTION SYSTEM OF A RAILWAY VEHICLE TRACTION SYSTEM, ASSOCIATED TRANSMISSION LINE AND ASSOCIATED RAILWAY VEHICLE

(30) Priorité: 06.02.2015 FR 1550929
(43) Date de publication de la demande: 10.08.2016
(73) Titulaire: ALSTOM Transport Technologies, 93400 Saint-Ouen (FR)
(72) Inventeur: PERIOT, Robert, 64460 LAMAYOU (FR)
(74) Mandataire: Lavoix

(56) Documents cités:
- EP-A1- 0 869 290
- DE-A1- 2 508 812
- DE-B- 1 231 494
- DE-C1- 19 719 746
- US-A- 3 265 408
- US-A- 3 977 213

## Description

La présente invention concerne un système de protection de la chaîne de traction d'un véhicule ferroviaire, ladite chaîne de traction comportant un moteur électrique et un circuit d'alimentation en puissance électrique du moteur électrique.

Le document DE 197 19 746 C1 divulgue un véhicule ferroviaire équipé d'une telle chaîne de traction.

L'invention concerne, plus particulièrement, un système de protection d'un moteur électrique synchrone à aimants permanents pour un véhicule ferroviaire.

Pour alimenter un tel moteur, une chaîne d'alimentation comporte successivement un convertisseur, un contacteur d'isolement, des câbles connectés entre le contacteur d'isolement et les bornes d'entrée du moteur.

En cas de détection d'un défaut électrique du type court-circuit, le contacteur d'isolement est ouvert pour isoler le convertisseur du moteur électrique. De ce fait, les composants du convertisseur sont protégés contre la puissance électrique générée par le moteur électrique fonctionnant à cet instant en source de courant puisqu'il est entraîné par les roues du véhicule ferroviaire en mouvement.

Cependant, l'ouverture du contacteur d'isolement ne permet pas d'isoler un défaut électrique en aval du contacteur d'isolement, c'est-à-dire un défaut interne au moteur électrique ou un défaut externe au moteur électrique, par exemple entre les câbles de connexion.

Or, un tel défaut en aval du contacteur d'isolement est généralement associé à la formation d'un arc électrique, qui peut conduire au départ d'un incendie ou à la destruction du moteur électrique. Dans ce dernier cas, il y a un risque pour que le rotor soit bloqué à l'intérieur du stator du moteur, conduisant à un évènement redouté nécessitant l'immobilisation du train et l'évacuation des passagers.

Pour garantir la sureté de fonctionnement d'un tel moteur électrique synchrone à aimants permanents, il est nécessaire de gérer toute défaillance possible pour éviter tout évènement redouté.

Le document EP 2 634 884 prévoit ainsi d'équiper la chaîne d'alimentation d'interrupteurs commandés supplémentaires permettant la mise en court-circuit franc des phases du moteur, pour éviter la formation et la propagation d'un arc électrique. Toutefois, un tel dispositif ne permet pas de résoudre tous les types de défauts internes à la machine.

L'invention a donc pour but de palier au problème précité, en déployant une solution de protection alternative à la solution de l'état de la technique.

On connaît par ailleurs, par exemple du document EP 8 69 290, un embrayage constitué de deux flasques pressées l'une contre l'autre de manière à transmettre un couple. Lors de la détection d'une surcharge, ces flasques sont découplées par un mécanisme de débrayage comportant une charge explosive.

A cet effet, l'invention a pour objet un véhicule ferroviaire selon les revendications.

L'invention sera mieux comprise à la lecture de la description qui va suivre donnée uniquement à titre d'exemple et faite en se référant aux figures annexées parmi lesquelles :
- la figure 1 est un schéma illustratif d'une chaîne de traction ferroviaire comportant un système de protection selon un premier mode de réalisation ;
- la figure 2 est un schéma illustratif d'une chaîne de traction ferroviaire comportant un système de protection selon un deuxième mode de réalisation ; et,
- la figure 3 est un schéma illustratif d'une chaîne de traction ferroviaire comportant un système de protection selon un deuxième mode de réalisation.

Dans tout ce qui suit, le terme « force électromotrice » s'entend comme la capacité d'un moteur électrique à générer une puissance électrique, notamment lors d'un fonctionnement dégradé.

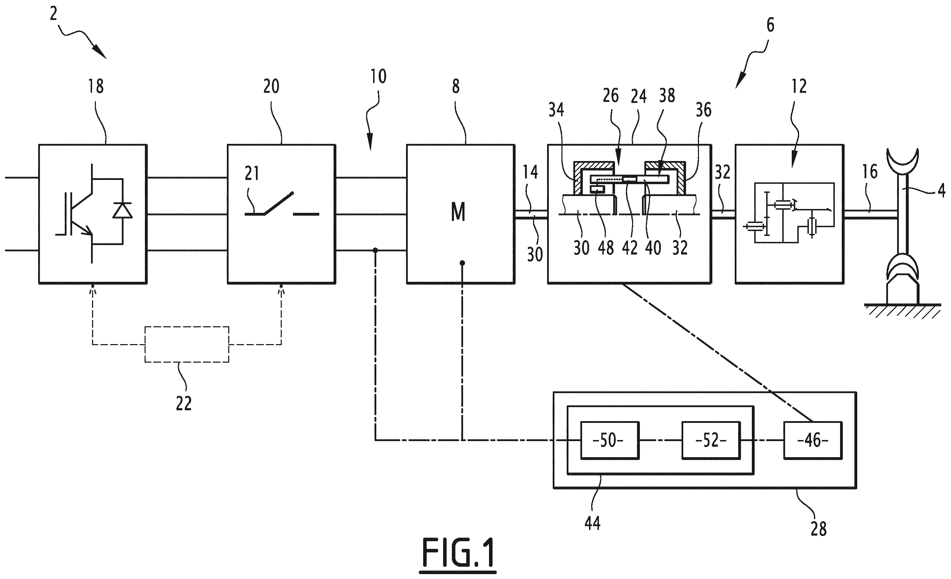

La figure 1 représente un premier mode de réalisation d'une chaîne de traction 2.

Celle-ci comporte un essieu 4, une ligne de transmission 6, un moteur 8 à aimants permanents et un circuit d'alimentation électrique 10 du moteur.

Le moteur 8 est un moteur synchrone à aimants permanents.

L'essieu 4 est un ensemble constitué d'un axe solidaire d'au moins une paire de roues, qui sont guidées sur une paire de rails.

La ligne de transmission 6 comprend un réducteur 12, à un ou plusieurs étages, disposé entre un arbre de sortie 14 du moteur 8 et un arbre d'entrée 16 de l'essieu 4.

Le circuit d'alimentation électrique 10 comporte un onduleur 18, un contacteur d'isolement 20, d'un dispositif interrupteur 21 de mise en court-circuit franc des phases du moteur, et un dispositif de commande 22 du contacteur 20 et du dispositif interrupteur 21.

L'onduleur 18 comporte trois bornes de sortie. Chaque borne est reliée à une phase du moteur électrique 8 à travers le contacteur d'isolement 20, le dispositif interrupteur 21, par un câble de connexion.

Le dispositif de commande 22 est propre à détecter une défaillance, notamment du type court-circuit, du circuit d'alimentation 10 et à commander l'ouverture du contacteur 20.

L'ouverture du contacteur 20 permet d'isoler l'onduleur 18 du moteur électrique 8, qui, dans le cas où survient un défaut, reste entraîné en rotation par l'essieu 4 et génère une force électromotrice risquant de détruire l'onduleur 18.

Cependant, l'ouverture du contacteur 20 n'est pas suffisante car, notamment en cas de court-circuit interne au moteur 8, la force électromotrice générée par le moteur 8, couplé à l'essieu 4, risque de détruire le moteur 8 lui-même.

La chaîne de traction 2 comporte ainsi un système de protection 24.

Le système de protection 24 permet d'isoler mécaniquement le moteur électrique 8 de l'essieu 4, notamment jusqu'à l'arrêt du véhicule ferroviaire. De cette manière, le rotor n'étant plus entraîné en rotation par l'essieu 4, le moteur 8 cesse de générer une force électromotrice.

Le système de protection 24 comprend un dispositif de couplage 26 et un moyen de commande 28 du dispositif de couplage 26.

Le dispositif de couplage 26 est placé entre un premier composant 30 et un second composant 32 de la ligne de transmission 6.

Le dispositif de couplage 26 est propre à basculer, de manière irréversible, d'un état embrayé dans un état débrayé, lors de la réception d'un signal de débrayage adapté, généré par le moyen de commande 28.

Dans l'état embrayé, un couple peut être transmis entre les premier et second composants 30, 32 de la ligne de transmission 6.

Dans l'état débrayé, aucun couple ne peut être transmis entre les premier et second composants 30, 32 de la ligne de transmission.

Dans le premier mode de réalisation de la figure 1, le premier composant 30 est un arbre de sortie 14 du moteur électrique 8 et le second composant 32 est un arbre d'entrée du réducteur 12.

Plus précisément, l'extrémité libre de l'arbre de sortie 14 du moteur se termine par un premier flasque 34, qui est disposé en vis-à-vis d'un second flasque 36 dont est munie l'extrémité de l'arbre d'entrée du réducteur 12.

Le dispositif de couplage 26 est constitué par une pluralité de boulons ou de goupilles explosifs, de solidarisation des premier et second flasques 34, 36 entre eux.

Un boulon explosif 38 comporte une tige 40 propre à solidariser les premier et second flasques 34, 36 entre eux et un module pyrotechnique 42 propre à rompre la tige 40, lors de la réception du signal de débrayage adapté, émis par le moyen de commande 28.

Le moyen de commande 28 est propre à émettre un signal de débrayage à destination du dispositif de couplage 26, de manière à basculer le dispositif de couplage 26 de l'état embrayé à l'état débrayé, en cas de détection d'une défaillance affectant le circuit d'alimentation 10 du moteur électrique et/ou le moteur électrique 8.

Le moyen de commande 28 comprend un moyen de détection 44 de défaillance, un module de commande distant 46 et un module de commande proche 48, qui est solidaire du dispositif de couplage 26.

Avantageusement, le moyen de commande 28 comprend une interface avec le conducteur du véhicule ferroviaire permettant l'affichage en cabine d'une signalisation indicative de l'émission du signal de débrayage.

Le moyen de détection 44 est propre à émettre un signal d'alerte vers le module de commande distant 46, en cas de détection d'une défaillance.

Le moyen de détection 44 comprend un module de mesure 50 et un module de calcul 52.

Le module de mesure 50 est propre à transmettre au module de calcul 52, des valeurs d'entrée et de sortie mesurées, relatives au fonctionnement de la chaine de traction 2, notamment du moteur 8.

Le module de mesure 50 comprend des capteurs mesurant des valeurs d'entrée et des capteurs mesurant des valeurs de sortie sur la chaine de traction 2.

Par exemple, les capteurs d'entrée mesurent un courant électrique, au niveau du circuit d'alimentation électrique 10 et/ou entre deux phases du moteur électrique 8.

Les capteurs de sortie mesurent également un courant électrique, au niveau du circuit d'alimentation électrique 10 et/ou entre deux phases du moteur électrique 8. D'autres grandeurs de sortie telles qu'une tension, un couple, etc. peuvent également être mesurées.

En variante, les capteurs d'entrée et de sortie réalisent une mesure d'une autre grandeur physique parmi une tension électrique, un champ magnétique, une température, une accélération, une vibration, etc.

Le module de calcul 52 est propre à recevoir les valeurs d'entrée et de sortie mesurées par le module de mesure 50 et à établir un diagnostic pouvant conduire à l'émission du signal d'alerte.

Le module de calcul 52 est apte à calculer des valeurs de sortie estimées à partir des valeurs d'entrée mesurées en utilisant un modèle dynamique de la chaîne de traction 2. Ce modèle dynamique de la chaîne de traction, fondé sur une pluralité d'équations différentielles reliant des grandeurs d'entrée à des grandeurs de sortie permet de calculer, à partir des valeurs d'entrée mesurées des grandeurs d'entrée, des valeurs de sortie estimées des grandeurs de sortie. Les valeurs de sortie estimées sont ensuite comparées aux valeurs de sortie mesurées. A partir d'un certain écart entre ces valeurs, un défaut est déclaré.

Le module de calcul 52 est apte à comparer les valeurs de sortie estimées avec les valeurs de sortie mesurées de la chaîne de traction 2.

Le module de calcul 52 est destiné à émettre le signal d'alerte, en cas d'écart significatif entre les valeurs de sortie estimées et mesurées.

En outre, le module de calcul 52 comprend avantageusement une mémoire enregistrant les valeurs d'entrée et de sortie mesurées et les valeurs de sortie estimées.

Le module de commande distant 46 est connecté au module de calcul 52.

Le module de commande distant 46 est apte à recevoir le signal d'alerte, provenant du module de calcul 52, et à convertir ce signal d'alerte, en un signal d'actionnement à destination du module de commande proche 48.

Le module de commande proche 48 est solidaire du dispositif de couplage 26 et est par conséquent entraîné en rotation.

Les communications entre le module de commande proche 48 et le module de commande distant 46 sont réalisées par l'intermédiaire d'une liaison radioélectrique, préférentiellement en mettant en oeuvre un protocole WiFi.

Le module de commande proche 48 est apte à recevoir le signal d'actionnement en provenance du module de commande distant 46.

Le module de commande proche 48 est propre à appliquer le signal d'actionnement reçu en tant que signal de débrayage au dispositif de couplage 26 de manière à basculer ce dernier de l'état embrayé à l'état débrayé.

Un procédé de protection du moteur électrique 8 d'un véhicule ferroviaire mis en oeuvre à l'aide du système de protection 24 de la figure 1 va maintenant être décrit.

Initialement, le véhicule ferroviaire circule sur un réseau ferroviaire.

Le module de mesure 50 mesure les valeurs d'entrée et de sortie au niveau du circuit d'alimentation électrique 10 et/ou entre deux phases du moteur électrique 8.

Le module de calcul 52 calcule les valeurs de sortie estimées par le modèle dynamique en fonction des valeurs d'entrée mesurées. Le module de calcul 52 mesure l'écart entre les valeurs de sortie mesurées et les valeurs de sortie estimées. Le module de calcul 52 établit son diagnostic.

Lorsqu'un écart significatif est mesuré, indicatif d'une défaillance risquant de conduire à un évènement redouté, le moyen de détection 44 émet un signal d'alerte vers le module de commande distant 46.

Le module de commande distant 46 réceptionne le signal d'alerte et communique le signal d'actionnement correspondant au module de commande proche 48.

Le module de commande proche 48 réceptionne le signal d'actionnement et l'applique, en tant que signal de débrayage, au dispositif de couplage 26.

Le signal de débrayage déclenche la mise à feu du module pyrotechnique 42, ce qui a pour conséquence de rompre la tige 40.

Le dispositif de couplage 26 basculant, de manière irréversible, de l'état embrayé à l'état débrayé, les premier et second flasques 30, 32 sont découplés l'un de l'autre.

L'arbre d'entrée 16 est désolidarisé de l'arbre de sortie 14. L'arbre de sortie 14, associé au rotor du moteur, décélère et s'immobilise, tandis que l'arbre d'entrée 16 continue à être entraîné par les roues du véhicule ferroviaire en mouvement. Le véhicule ferroviaire peut donc poursuivre son mouvement sans que le moteur de la chaine défaillante ne fonctionne en générateur de courant.

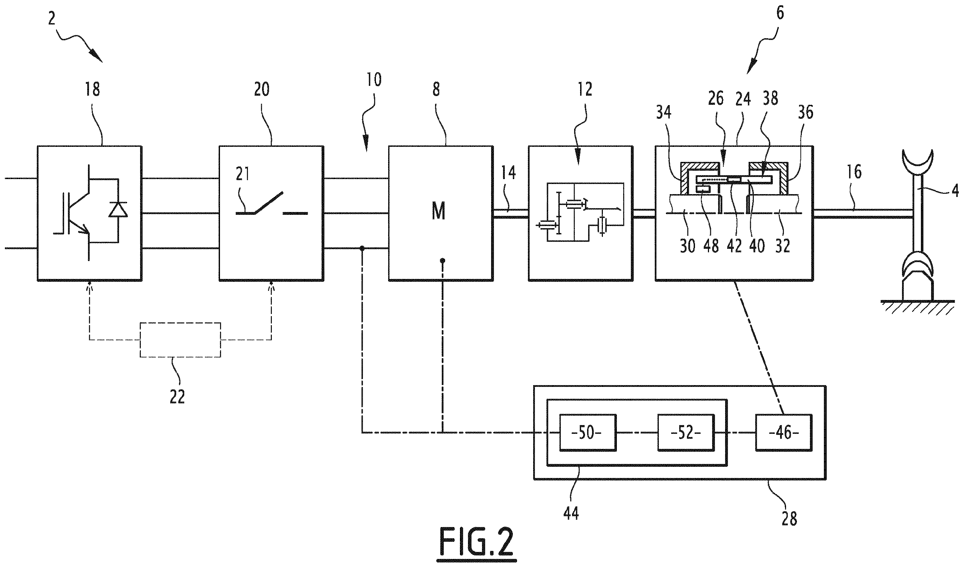

La figure 2 illustre un deuxième mode de réalisation du système de protection 24 dans lequel, toutes choses égales par ailleurs, le dispositif de couplage 26 est placé entre un arbre de sortie du réducteur 12 et un arbre d'entrée 16 de l'essieu.

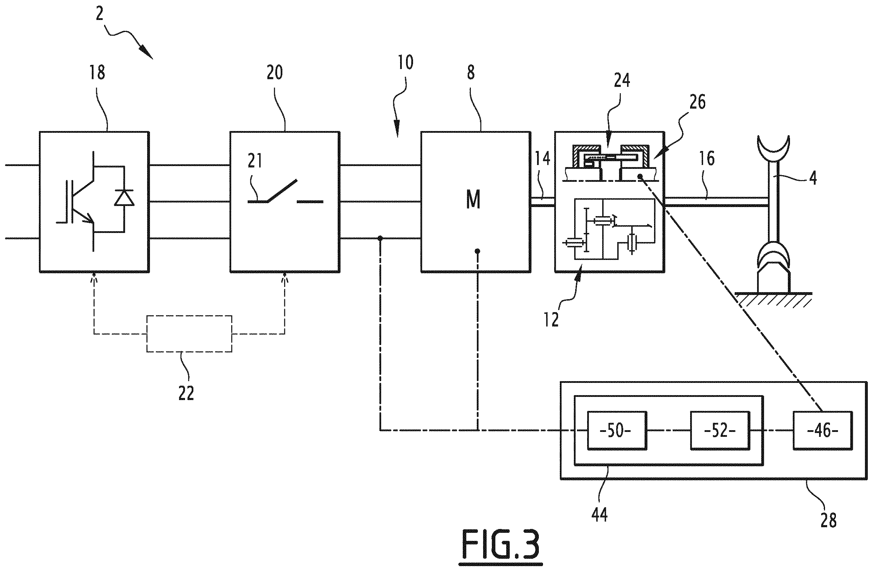

La figure 3 illustre un troisième mode de réalisation du système de protection 24 dans lequel le dispositif de couplage 26 est placé entre deux étages d'un réducteur 12 à plusieurs niveaux.

Un tel système de protection 24 constitue une solution mécanique sécuritaire d'urgence permettant de désolidariser le moteur électrique 8 de l'essieu 4, pour isoler mécaniquement le moteur 8 de tout entrainement mécanique de l'essieu 4.

Un tel système de protection 24 constitue une alternative mécanique à la place ou, de préférence, en plus de la solution purement électrique de l'état de la technique, permettant de se prémunir de tout évènement redouté.

En variante, le dispositif de couplage 26 mécanique est propre à basculer de l'état embrayé à l'état débrayé, et réciproquement de l'état débrayé à l'état embrayé, lors de la réception d'un signal d'embrayage adapté, généré par le moyen de commande 28.

Dans une autre variante, indépendante des précédentes, le moyen de détection 44 et le dispositif de commande 22 partagent les moyens de détection d'une défaillance de la chaîne de traction.

## Revendications

1. Véhicule ferroviaire comprenant une chaîne de traction (2) comportant un essieu (4), un moteur électrique (8) synchrone à aimants permanents, une ligne de transmission (6) entre l'essieu et le moteur électrique, et un circuit d'alimentation électrique (10) du moteur électrique,
**caractérisé en ce qu'**il comporte un système de protection (24) de la chaîne de traction (2) comprenant :
- un dispositif de couplage (26) mécanique entre des premier (30) et second composants (32) de la ligne de transmission (6), le premier composant (30) étant relié à un arbre de sortie (14) du moteur électrique (8) et le second composant (32) étant relié à un arbre d'entrée (16) de l'essieu (4), le dispositif de couplage (26) pouvant être dans un état embrayé, dans lequel un couple peut être transmis entre les premier et second composants (30, 32), ou dans un état débrayé, dans lequel aucun couple ne peut être transmis entre les premier et second composants (30, 32) ; et,
- un moyen de commande (28) propre à appliquer un signal de débrayage au dispositif de couplage (26), de manière à basculer le dispositif de couplage (26) de l'état embrayé à l'état débrayé, en cas de détection d'une défaillance affectant le circuit d'alimentation (10) du moteur électrique (8) et/ou le moteur électrique (8),
le dispositif de couplage (26) comportant au moins un élément de solidarisation (40) des premier et second composants (30, 32) entre eux et un module pyrotechnique (42) propre à rompre l'élément de solidarisation (40) lorsqu'un signal de débrayage est appliqué par le moyen de commande (28),
le moyen de commande (28) comportant un module de commande distant (46), connecté par l'intermédiaire d'une liaison sans fil à un module de commande proche (48), solidaire du dispositif de couplage (26), le module de commande proche (48) générant le signal de débrayage appliqué au dispositif de couplage (26) lors de la réception d'un signal d'actionnement émis par le module de commande distant (46).
le moyen de commande (28) comporte un moyen de détection (44) propre, en cas de détection d'une défaillance affectant le circuit d'alimentation du moteur électrique et/ou le moteur électrique, à émettre un signal d'alerte vers le module de commande distant (46) pour que le module de commande distant (46) émette un signal d'actionnement.

2. Véhicule ferroviaire selon la revendication 1, dans lequel les premier et second composants (30, 32) sont des premier et second flasques (34, 36) en vis-à-vis l'un de l'autre, et dans lequel le dispositif de couplage (26) mécanique est un boulon explosif (38) de solidarisation des premier et second flasques (34,36) entre eux.

3. Véhicule ferroviaire selon la revendication 1 ou la revendication 2, dans lequel le moyen de détection (44) est propre à calculer des valeurs de sortie estimées à partir de valeurs d'entrée mesurées et d'un modèle dynamique de la chaîne de traction (2), puis à comparer ces valeurs de sortie estimées à des valeurs de sortie mesurées de la chaîne de traction (2), le moyen de détection (44) étant propre à émettre un signal d'alerte en cas d'écart significatif entre les valeurs de sortie estimées et mesurées.

## Patentansprüche

1. Schienenfahrzeug, welches einen Antriebsstrang (2) aufweist, welcher aufweist eine Achse (4), einen synchronen Elektromotor (8) mit Permanentmagneten, einen Übertragungsweg (6) zwischen der Achse und dem Elektromotor und einen Schaltkreis zur elektrischen Versorgung (10) des Elektromotors,
**dadurch gekennzeichnet, dass** er ein System zum Schutz (24) des Antriebsstrangs (2) aufweist, welches aufweist:
- eine mechanische Kopplungsvorrichtung (26) zwischen einer ersten (30) und einer zweiten Komponente (32) des Übertragungswegs (6), wobei die erste Komponente (30) mit einer Ausgangswelle (14) des Elektromotors (8) verbunden ist und die zweite Komponente (32) mit einer Eingangswelle (16) der Achse (4) verbunden ist, wobei die Kopplungsvorrichtung (26) in einem gekoppelten Zustand sein kann, in welchem ein Drehmoment zwischen der ersten und der zweiten Komponente (30, 32) übertragen werden kann, oder in einem entkoppelten Zustand sein kann, in welchem kein Drehmoment zwischen der ersten und der zweiten Komponente (30, 32) übertragen werden kann, und
- ein Mittel zum Steuern (28), welches imstande ist, ein Entkopplungs-Signal an die Kopplungsvorrichtung (26) anzulegen, um die Kopplungsvorrichtung (26) von dem gekoppelten Zustand in den entkoppelten Zustand umzuschalten, in dem Fall einer Detektion einer Störung, welche den Schaltkreis zur Versorgung (10) des Elektromotors (8) und/oder den Elektromotor (8) betrifft,
wobei die Kopplungsvorrichtung (26) aufweist mindestens ein Element zum Verbinden (40) der ersten und der zweiten Komponente (30, 32) miteinander und ein pyrotechnisches Modul (42), welches imstande ist, das Element zum Verbinden (40) zu unterbrechen, wenn ein Entkopplungs-Signal mittels des Mittels zum Steuern (28) angelegt wird,
wobei das Mittel zum Steuern (28) ein entferntes Modul zum Steuern (46) aufweist, welches durch eine kabellose Verbindung mit einem nahen Modul zum Steuern (48) verbunden ist, welches mit der Kopplungsvorrichtung (26) verbunden ist, wobei das nahe Modul zum Steuern (48) das Entkopplungs-Signal erzeugt, welches an die Kopplungsvorrichtung (26) angelegt wird, in Folge des Empfangens eines Betätigungssignals, welches mittels des entfernten Moduls zum Steuern (46) gesendet wird,
wobei das Mittel zum Steuern (28) ein Mittel zum Detektieren (44) aufweist, welches imstande ist, im Falle des Detektierens einer Störung, welche den Schaltkreis zur Versorgung des Elektromotors und/oder den Elektromotor betrifft, ein Alarmsignal zu dem entfernten Modul zum Steuern (46) zu senden, damit das entfernte Modul zum Steuern (46) ein Betätigungssignal sendet.

2. Schienenfahrzeug gemäß Anspruch 1, wobei die erste und die zweite Komponente (30, 32) ein erster und ein zweiter Flansch (34, 36) sind, die einander gegenüberliegen, und wobei die mechanische Kopplungsvorrichtung (26) ein Sprengbolzen (38) zum Verbinden des ersten und des zweiten Flansches (34, 36) miteinander ist.

3. Schienenfahrzeug gemäß Anspruch 1 oder Anspruch 2, wobei das Mittel zum Detektieren (44) imstande ist, Ausgangswerte, die ausgehend von gemessenen Eingangswerten und einem dynamischen Modell des Antriebsstrangs (2) abgeschätzt werden, zu berechnen, dann diese abgeschätzten Ausgangswerte mit gemessenen Ausgangswerten des Antriebsstrangs (2) zu vergleichen, wobei das Mittel zum Detektieren (44) imstande ist, ein Alarmsignal zu senden in dem Fall einer signifikanten Diskrepanz zwischen den abgeschätzten und den gemessenen Ausgangswerten.

## Claims

1. A railway vehicle comprising a traction system (2) comprising an axle (4), a permanent magnet synchronous electric motor (8), a transmission line (6) between the axle and the electric motor, and an electric power circuit (10) of the electric motor, caracterised in that it comprises a protection system (24) for the traction system (2) comprising:
- a mechanical coupling device (26) between first (30) and second (32) components of a transmission line (6), the first component (30) being connected to an output shaft (14) of the electric motor and the second component (32) being connected to an input shaft (16) of an axle (4), the coupling device (26) being able to be in an engaged state, in which a torque can be transmitted between the first and second components (30, 32), or in a disengaged state, in which no torque can be transmitted between the first and second components (30, 32); and
- a control means (28) for applying a disengagement signal to the mechanical coupling device (26), so as to switch the mechanical coupling device (26) from the engaged state to the disengaged state if a failure is detected affecting the power circuit (10) of the electric motor (8) and/or the electric motor (8) itself,
the coupling device (26) including at least one securing element (40) for securing the first and second components (30, 32) to one another and a pyrotechnic module (42) able to break the securing element (40) when a disengagement signal is applied by the control means (28),
the control means (28) including a remote control module (46), connected by means of a wireless link to a close control module (48), secured to the coupling device (26), the close control module (48) generating the disengagement signal applied to the coupling device (26) upon reception of an actuating signal emitted by the remote control module (46),
the control means (28) including a detection means (44) able, when a failure of the power circuit of the electric motor and/or the electric motor is detected, to send an alert signal to the remote control module (46) so that the remote control module (46) emits an actuating signal.

2. A railway vehicle according to claim 1, wherein the first and second components (30, 32) are first and second flanges (34,36) facing one another, and wherein the mechanical coupling device (26) is an explosive bolt (38) securing the first and second flanges (34, 36) to one another.

3. A railway vehicle according to claim 1 or claim 2, wherein the detection means (44) is able to calculate estimated output values from measured input values and a dynamic model of the traction system (2), and to compare said estimated output values to measured output values on the traction system (2), the detection module (44) being able to emit an alert signal in case of a significant deviation between the estimated and measured output values.
